(19) Europäisches Patentamt
European Patent Office
Office européen des brevets

(11) EP 0 767 148 B1

(12) EUROPÄISCHE PATENTSCHRIFT

(45) Veröffentlichungstag und Bekanntmachung des Hinweises auf die Patenterteilung:
04.11.1998 Patentblatt 1998/45

(51) Int. Cl.$^6$: C03B 37/027, C03B 23/047, C03B 37/07, G05B 13/02, G05D 5/03

(21) Anmeldenummer: 96115570.2

(22) Anmeldetag: 27.09.1996

(54) **Verfahren und Vorrichtung zum Herstellen eines Bauteils aus Glas durch Ziehen aus einem Rohling**

Process and device for manufacturing glass articles by drawing from a preform

Procédé et appareil pour la fabrication des corps en verre par l'étirage d'une préforme

(84) Benannte Vertragsstaaten:
DE FR GB

(30) Priorität: 04.10.1995 DE 19536960

(43) Veröffentlichungstag der Anmeldung:
09.04.1997 Patentblatt 1997/15

(73) Patentinhaber:
• Heraeus Quarzglas GmbH
63450 Hanau (DE)
• FRAUNHOFER-GESELLSCHAFT ZUR FÖRDERUNG DER ANGEWANDTEN FORSCHUNG E.V.
80636 München (DE)

(72) Erfinder:
• Bogdahn, Thomas
63791 Karlstein (DE)
• Hain, Harald
63796 Kahl (DE)
• Sajidman, Markoto
76137 Karlsruhe (DE)

(74) Vertreter: Staudt, Armin Walter
Heraeus Quarzglas GmbH,
Schutzrechte,
Quarzstrasse
63450 Hanau (DE)

(56) Entgegenhaltungen:
FR-A- 2 383 138          US-A- 4 102 661
US-A- 5 314 517          US-A- 5 443 610

• PATENT ABSTRACTS OF JAPAN vol. 7, no. 46 (C-153) & JP-A-57 200238 (NTT CORP.), 8.Dezember 1982,
• PATENT ABSTRACTS OF JAPAN vol. 14, no. 188 (C-710) & JP-A-02 034533 (APLS ELECTRONIC CO. LTD.), 5.Februar 1990,

**Beschreibung**

Die Erfindung betrifft ein Verfahren zum Herstellen eines langgestreckten Bauteils aus Glas durch Ziehen aus einem Rohling, bei welchem der Rohling einer Heizzone zugeführt, dort bereichsweise erweicht, und aus dem erweichten Bereich unter Ausbildung einer Ziehzwiebel das Bauteil kontinuierlich und geregelt abgezogen wird, wobei totzeitfreie Schätzwerte mindestens einer Regelgröße prädiziert werden, weiterhin mindestens eine mit der Regelgröße korrelierbare geometrische Größe des Bauteils fortlaufend gemessen und die so ermittelten Meßwerte zum Abgleich der prädizierten Schätzwerte verwendet werden, und anhand der so abgeglichenen prädizierten Schätzwerte die Soll-Ist-Abweichung der Regelgröße bestimmt und in eine Änderung einer Stellgröße umgesetzt wird.

Derartige Verfahren sind beispielsweise zur Herstellung von Rohren, Stäben, Hohlfasern und Vollfasern geeignet.

Für viele Anwendungen solcher Bauteile, beispielsweise von Hohlfasern in der Chromatographie, von Rohren als Halbzeuge für die Herstellung von Vorformen für Lichtwellenleiter oder auch für die Lichtwellenleiter selbst, spielt die Geometrie der Bauteile eine entscheidende Rolle. An deren Maßhaltigkeit werden daher sehr hohe Anforderungen gestellt, so daß die entsprechenden Herstellverfahren aufwendige Regelprozesse und Regeleinrichtungen erfordern.

Im einfachsten Fall wird der Außendurchmesser des vom Rohling abgezogenen Bauteiles mittels eines Durchmesser-Meßgerätes kontinuierlich gemessen. Die so erhaltenen Meßwerte dienen zur Kontrolle der Maßhaltigkeit des Außendurchmessers und werden gleichzeitig einer Regeleinrichtung zugeführt, die Abweichungen vom Sollwert des Außendurchmessers feststellt und in Änderungen der Ziehgeschwindigkeit umsetzt. In diesem Fall ist die sogenannte "Regelgröße" der Außendurchmesser und die sogenannte "Stellgröße" die Ziehgeschwindigkeit. Mittels einer derart einfachen Regelung können die hohen Anforderungen an die Maßhaltigkeit der Bauteile aber nicht erfüllt werden. Eine Hauptursache dafür liegt in einer prozeßinhärenten "Meßtotzeit". Diese beruht darauf, daß der Außendurchmesser immer erst eine bestimmte Zeitspanne nach seiner eigentlichen Ausbildung gemessen werden kann. Die Auswirkungen von Änderungen der Ziehparameter auf den Außendurchmesser werden daher erst verspätet, nämlich durch die Messung im Durchmesser-Meßgerät, erkennbar.

Zur Kompensierung dieser Meßtotzeit der Prozeßregelung wird in dem gattungsgemäßen Verfahren gemäß der US-A 5,314,517 ein Regelungskonzept vorgeschlagen, das als "Smith-Prädiktor" bekannt ist. Hierbei wird der Außendurchmesser einer optischen Faser kontinuierlich berührungslos gemessen und aus den tatsächlichen Meßwerten und aus der Ziehgeschwindigkeit ein fiktiver Außendurchmesser mittels eines vorgegebenen Prozeßmodells prädiziert. Der prädizierte Außendurchmesser wird dann anstelle des tatsächlich gemessenen Außendurchmessers als Regelgröße verwendet.

Für die Regelung mittels "Smith-Prädiktor" ist ein sehr genaues Prozeßmodell sowie die exakte Kenntnis aller relevanten Prozeßparameter sowie der Meßtotzeit erforderlich. Das zeitvariante, nichtlineare und dynamische Verformungsverhalten des Ziehprozesses läßt sich aber nicht ohne weiteres vorhersagen und daher mittels eines Prozeßmodells auch nicht ausreichend genau erfassen. Außerdem können die Prozeßparameter und Totzeiten sich im Verlaufe des Prozesses unvorhersehbar ändern, so daß bei dem bekannten Herstellungsverfahren Schwankungen des Faser-Außendurchmessers unvermeidlich sind.

Weiterhin betrifft die Erfindung ein Verfahren zum Herstellen eines langgestreckten Bauteils aus Glas durch Ziehen aus einem Rohling, bei welchem der Rohling einer Heizzone zugeführt, dort bereichsweise erweicht, und aus dem erweichten Bereich unter Ausbildung einer Ziehzwiebel das Bauteil kontinuierlich und geregelt abgezogen wird, wobei mindestens eine Regelgröße der Prozeßregelung fortlaufend gemessen, aus den so ermittelten Meßwerten die Soll-Ist-Abweichung der Regelgröße bestimmt und in eine Änderung einer Stellgröße umgesetzt wird. Auch ein derartiges Verfahren ist, wie oben bereits erläutert, aus der US-A 5,314,517 bekannt. Es hat sich gezeigt, daß das bekannte Verfahren für die Regelung, insbesondere bei plötzlichen Störungen des Verfahrensablaufes oder bei Änderungen der Verfahrensparameter im Verlaufe des Ziehvorganges, nicht ausreichend ist.

In der US-A 4,102,661 wird vorgeschlagen, die aufgrund kaustischer Strahlung an der Ziehzwiebel hervorgerufene Intensitätsverteilung zur Regelung von Ziehparametern, wie Vorschubgeschwindigkeit der Vorform oder Abzugsgeschwindigkeit der Faser, zu verwenden. Gemäß einem Ausführungsbeispiel der Erfindung wird während des Faserziehens die Ziehzwiebel mit einem $CO_2$-Laser bestrahlt und die von der Ziehzwiebel reflektierte Intensitätsverteilung wird auf einem Bildschirm aufgefangen und ausgewertet. Es wird festgestellt, daß sich im Verlauf des Ziehverfahrens der Faserdurchmesser nur wenig verändert und daß gleichzeitig die Position der Intensitätsverteilung um etwa 1 cm oszilliert. Aufgrund der geringen Lichtintensität des $CO_2$-Lasers und der demgegenüber starken Temperaturstrahlung der Ziehzwiebel ist das Verfahren nur bei Ziehtemperaturen wesentlich unterhalb von 2000° C, wie sie beispielsweise für das Ziehen von Quarzglasfasern benötigt werden, geeignet.

Der Erfindung liegt insoweit die Aufgabe zugrunde, ein Verfahren anzugeben, das die Herstellung eines Bauteils mit hoher Maßhaltigkeit erlaubt.

Weiterhin betrifft die Erfindung eine Vorrichtung für die Herstellung eines langgestreckten Bauteils aus Glas durch Ziehen aus einem Rohling, mit einer Vorschubeinrichtung zum Zuführen des Rohlings zu einer Heizeinrichtung, mit einem Abzug zum Abziehen des Bauteils aus einem in der Heizeinrichtung erweichten Bereich des Rohlings, mit einer

EP 0 767 148 B1

Meßeinrichtung zum Erfassen einer geometrischen Größe des aus dem Rohling abgezogenen Bauteils, die mit einer Regeleinrichtung verbunden ist, in der die Soll-Ist-Abweichung von einer Regelgröße ermittelt und in Abhängigkeit davon eine Stellgröße eingestellt wird.

Eine Vorrichtung der angegebenen Gattung ist ebenfalls aus der US-A 5,314,517 bekannt. Bei der bekannten Vorrichtung ist ein Ziehturm für das Ziehen einer optischen Faser aus einer Vorform vorgesehen, der einen Vorschub für die Halterung und für das kontinuierliche, vertikale Zuführen der Vorform in einen Ofen aufweist. Das in den Ofen ragende Ende der Vorform wird bereichsweise erweicht und aus dem erweichten Bereich unter Ausbildung einer Ziehzwiebel eine Faser kontinuierlich und mit einer regelbaren Ziehgeschwindigkeit mittels einer Zieheinrichtung abgezogen. Zwischen dem Ofen und der Zieheinrichtung ist ein Durchmesser-Meßgerät für die berührungslose optische Messung des Außendurchmessers der Faser vorgesehen. Das Durchmesser-Meßgerät und die Zieheinrichtung sind jeweils mit einer Regeleinrichtung verbunden, die Soll-Ist-Abweichung des Außendurchmessers der Faser vom Soll-Durchmesser ermittelt und in eine Änderung der Ziehgeschwindigkeit umsetzt. Zur Kompensation der inhärenten Meßtotzeit ist die Regeleinrichtung mit einem "Smith-Prädiktor" versehen.

Mittels des prozeßmodell-basierten Regelungskonzeptes der bekannten Vorrichtung lassen sich Durchmesserschwankungen des Lichtwellenleiters nicht vollkommen ausschließen.

Der Erfindung liegt daher weiterhin die Aufgabe zugrunde, eine Vorrichtung bereitzustellen, mit der langgestreckte Bauteile aus Glas mit sehr guter Maßhaltigkeit aus einem Rohling gezogen werden können.

Hinsichtlich des Verfahrens wird die Aufgabe ausgehend von dem eingangs genannten Verfahren erfindungsgemäß einerseits dadurch gelöst, daß für die Prädiktion des Schätzwertes eine Messung der geometrischen Größe an einer ersten Meßstelle im Bereich der Ziehzwiebel herangezogen wird.

Unter dem Ausdruck "Ziehzwiebel" wird derjenige erweichte Bereich verstanden, in dem der Rohling plastische Verformung erfährt.

Als "geometrische Größe" kann jede Abmessung des Bauteils gemessen werden, die mit der "Regelgröße" der Prozeßregelung korrelierbar ist. Üblicherweise handelt es sich um die "Regelgröße" selbst. Davon wird im folgenden der Einfachheit halber ausgegangen. Wegen der im Bereich der Ziehzwiebel noch andauernden Verformung entspricht der dort gewonnene Meßwert der geometrischen Größe jedoch nicht deren endgültigen Wert im Bauteil.

Dadurch, daß die geometrische Größe im Bereich der Ziehzwiebel gemessen wird, wird eine totzeitfreie Prozeßregelung ermöglicht. Denn Änderungen der Verfahrensparameter, wie insbesondere der Stellgröße, resultieren unmittelbar in Änderungen der geometrischen Größe an der ersten Meßstelle im Bereich der Ziehzwiebel und werden dort totzeitfrei erfaßt.

Die Erfinder haben überraschend gefunden, daß sich aus dem für die geometrische Größe in diesem Bereich gemessenen Wert, der sich tatsächlich endgültige einstellende Wert der geometrischen Größe des Bauteils außerhalb dieses Bereiches sehr genau prädizieren, also vorhersagen läßt.

Der prädizierte Schätzwert wird einem Abgleich unterworfen. Die konkrete Art und Weise des Abgleiches liegt im Ermessen des Fachmanns. Beispielsweise kann zum Abgleich zunächst der tatsächliche Wert der jeweiligen geometrischen Größe an einer zweiten Meßstelle gemessen und mit dem prädizierten Schätzwert verglichen werden. In diesem Fall kann dann die Abweichung zwischen den beiden Werten bei der Bestimmung des Istwertes der Regelgröße nach folgender Gleichung berücksichtigt werden:

$$y_{regel}(t) = y_{prädiziert}(t) + (y_{gemessen}(t) - y_{prädiziert}(t-T_{tot})), \qquad \text{(Gl. 1)}$$

wobei "$y_{regel}$" den Istwert der Regelgröße, "$y_{prädiziert}$" den prädizierten Schätzwert, "$y_{gemessen}$" den gemessenen Wert der geometrischen Größe, "t" die Zeit und "$T_{Tot}$" die Meßtotzeit bezeichnet.

Die so erhaltenen Vorhersagen über den Istwert der geometrischen Größe bzw. die Istwerte der geometrischen Größen des Bauteils sind sehr genau und von Schwankungen der Prozeßparameter nahezu unabhängig, da sie nicht, wie beim Verfahren nach dem Stand der Technik, auf einem mit der Meßtotzeit behafteten Meßwert und einem Streckenmodell, sondern auf einem realen, totzeitfreien Meßwert beruhen.

Die erfindungsgemäß hergestellten "länglichen Bauteile" können die eingangs erläuterten Geometrien aufweisen.

Die Zuführung des Rohlings zur Heizzone kann vertikal, horizontal oder schräg erfolgen, wobei bei den beiden zuletzt genannten Varianten eine Rotation des Rohlings um seine Längsachse erforderlich ist. Es ist offenkundig, daß in kinematischer Umkehr des Verfahrens auch die Heizzone auf den Rohling zubewegt werden kann. Üblicherweise ist die Zuführgeschwindigkeit des Rohlings zu der Heizzone konstant; sie kann aber auch regelbar sein.

Die "fortlaufende Messung" der geometrischen Größe des Bauteils im Bereich der Ziehzwiebel kann kontinuierlich oder diskontinuierlich erfolgen, wobei bei einer diskontinuierlichen Messung die Prozeßregelung um so genauer ist, je kürzer die Zeitabstände zwischen aufeinanderfolgenden Messungen gewählt werden.

Für das Ermitteln des prädizierten Schätzwertes wird eine Verfahrensweise bevorzugt, die folgende Verfahrensschritte umfaßt:

3

a) eine erste Messung der geometrischen Größe an der ersten Meßstelle,

b) eine zweite Messung der geometrischen Größe an einer zweiten Meßstelle, die der ersten Meßstelle, in Ziehrichtung gesehen, um einen festen Meßstellen-Abstand nachgeordnet ist, und zwar nach Ablauf einer Zeitspanne, die sich aus dem Verhältnis des Meßstellen-Abstandes und der Ziehgeschwindigkeit ergibt,

c) Ermitteln eines Korrelationswertes aus der ersten und aus der zweiten Messung,

d) erneute Messung der geometrischen Größe an der ersten Meßstelle und

e) Prädiktion des Schätzwertes anhand dem gemäß d) gemessenen Meßwert und aus dem Korrelationswert.

Dabei ist es günstig, die zweite Meßstelle in einen Bereich zu verlegen, in dem sich das Baute nicht mehr verformt, so daß die zu messende geometrische Größe ihren endgültigen Wert erreicht hat.

Es ist nicht erforderlich, daß die an der ersten Meßstelle gemessene geometrische Größe die gleiche Abmessung des Bauteils betrifft wie die an der zweiten Meßstelle gemessene geometrische Größe. Wesentlich ist nur, daß zwischen den jeweiligen "geometrischen Größen" ein fester mathematischer Zusammenhang besteht. So kann beispielsweise bei einem hohlzylindrischen Bauteil mit bekannter Wandstärke an der ersten Meßstelle der Innendurchmesser und an der zweiten Meßstelle der Außendurchmesser gemessen werden. Es wird aber eine Verfahrensweise bevorzugt, bei der an beiden Meßstellen die gleiche Abmessung als geometrische Größe gemessen wird und bei der, wie oben bereits dargelegt, die gemessene geometrische Größe bzw. der hierfür prädizierte Schätzwert gleichzeitig die Regelgröße der Prozeßregelung ist.

Die in Verfahrensschritt b) erläuterte Zeitspanne würde der Meßtotzeit der Regelung entsprechen, wenn der Istwert der Regelgröße anhand der zweiten Meßstelle ermittelt würde. Bei diesem Verfahrensschritt wird die von der ersten Meßstelle gemessene geometrische Größe um ein Schieberegister, das dieser Meßtotzeit entspricht, verzögert, an der zweiten Meßstelle erneut gemessen. Die bei der ersten und der zweiten Meßstelle gemessenen Werte lassen folgenden, experimentell gefundenen, mathematischen Zusammenhang erkennen:

$$y_2(t) = a_0(t) + a_1 \cdot y_1(t\text{-}T_{Tot}), \qquad (Gl.2)$$

wobei "$y_1$" den Meßwert an der ersten Meßstelle, "$y_2$" den Meßwert an der zweiten Meßstelle, "$a_0$" einen zeitvarianten Parameter, "$a_1$" einen zeitinvarianten Parameter, "t" die Zeit und "$T_{Tot}$" die Meßtotzeit bezeichnet. Hierbei wurde gefunden, daß der Parameter $a_1$ eine prozeßspezifische Konstante darstellt, während sich der Parameter $a_0$, der in diesem Fall gleichzeitig der zu ermittelnde Korrelationswert ist, im Verlaufe des Herstellungsprozeß langsam ändern kann.

Aus den so gemessenen Meßwerten läßt sich somit nach Verfahrensschritt c) ein über die Prozeßdauer mehr oder weniger konstanter Korrelationswert ermitteln. Dieser kann dann für jede weitere (und totzeitfreie) Messung der geometrischen Größe an der ersten Meßstelle der Prädiktion des Schätzwertes an der zweiten Meßstelle zugrundegelegt werden.

Der Istwert der Regelgröße wird somit (entsprechend Gl. 1) nach folgender Gleichung berechnet:

$$y_{regel}(t) = a_1(t) + (y_2(t) - a_1 \cdot y_1(t\text{-}T_{tot})), \qquad (Gl.3)$$

Eine besonders genaue Prädiktion des Schätzwertes ergibt sich bei einem Verfahren, bei dem das Ermitteln des Korrelationswertes nach Verfahrensschritt c) zusätzlich anhand gemessener oder eingestellter Werte der Stellgröße erfolgt.

Als besonders vorteilhaft hat sich eine Verfahrensweise erwiesen, bei der Korrelationswert in regelmäßigen Zeitabständen, vorzugsweise im Bereich von 0,5 bis 5 Sekunden, aktualisiert wird. Diese Werte gelten für mittlere Abziehgeschwindigkeiten des Bauteils zwischen 0,2 m/min und 4 m/min. Die geeignete Abtastfrequenz hängt jedoch sehr stark von der Abziehgeschwindigkeit des Bauteils ab. Bei sehr hohen Abziehgeschwindigkeiten im Bereich von mehreren Metern pro Sekunde sind wesentlich höhere Abtastfrequenzen im Bereich unterhalb von 0,1 Hz sinnvoll.

Bevorzugt wird als Regelgröße der Außendurchmesser des Bauteils, und/oder bei einem rohrförmigen Bauteil der Innendurchmesser und/oder die Wandstärke verwendet.

Die nachfolgend beschriebene Verfahrensweise wird zur Herstellung von rohrförmigen Bauteilen bevorzugt, wobei mindestens eine zusätzliche, zweite Regelgröße vorgesehen ist und wobei die Prädiktion des Schätzwertes der zweiten Regelgröße anhand gemessener oder eingestellter Werte mindestens einer Stellgröße der Regelung und unter Anwendung eines Streckenmodells nach Art eines Smith-Prädiktors erfolgt und folgende Verfahrensschritte umfaßt:

a) eine erste Messung der geometrischen Größe zur Ermittlung eines ersten Wertes der zweiten Regelgröße,

b) Ermittlung der Soll-Ist-Abweichung der nach a) ermittelten Regelgröße,

c) Umsetzen in eine fiktive Änderung des Stellwertes der Stellgröße,

d) Bereitstellen eines realitätsnahen Streckenmodells des Übertragungsverhältnisses zwischen Stellgröße und zweiter Regelgröße, und

e) Prädiktion des Schätzwertes anhand der fiktiven Änderung des Stellwertes und dem Streckenmodell gemäß d) unter Verwendung des Meßwertes der ersten Messung der geometrischen Größe an der ersten Meßstelle.

Die Prädiktion erfolgt unter Anwendung eines Streckenmodells des Übertragungsverhältnisses zwischen Stellgröße und Regelgröße. Ein geeignetes Streckenmodell 1. Ordnung läßt sich mit folgender allgemeiner Gleichung beschreiben: $y(t) + T \cdot dy(t)/dt = k \cdot u(t)$, wobei "y" die Regelgröße, "u" die Stellgröße, "T" eine Zeitkonstante, die den dynamischen Zusammenhang zwischen einer Stellgrößenänderung und der Regelgröße beschreibt, "dy(t)/dt" die zeitliche Ableitung der Regelgröße, und "k" einen konstanten Übertragungsfaktor zwischen der Stellgrößenänderung und der Regelgrößenänderung beschreibt. "T" wird üblicherweise empirisch ermittelt, "k" läßt sich leicht für den jeweiligen Regelkreis anlaytisch herleiten.

Nachfolgend werden anhand der oben angegebenen allgemeinen Gleichung analytisch hergeleitete Streckenmodelle für die Regelung des Durchmessers (D) des Bauteils, seiner Querschnittsfläche (A), bzw. bei einem rohrförmigen Bauteil der Wandstärke (W) und des Wandstärke-Durchmesser-Verhältnisses (Q) beschrieben:

**Streckenmodelle des Durchmessers und der Wanddicke:**

| | |
|---|---|
| $D(t) = D_O + D_v(t) + D_p(t)$ ||
| $D_v(t) + T_v \cdot dD_v(t)/dt = k_{D,v} \cdot (v(t) - v_0)$ | $D_p(t) + 2 \cdot T_p \cdot dD_p(t)/dt + T_p{}^2 \cdot d^2 D_p(t)/dt^2 = k_{D,p} \cdot (p(t) - p_0)$ |
| $k_{D,v} = -D_0/2 \cdot v_0$ | $k_{D,p} = (D_0/2p_0) \cdot ((D_0 - 2W_0)/(D_0 - W_0)) \cdot \log(1/Q_0)$ |
| $W(t) = W_0 + W_v(t) + W_p(t)$ ||
| $W_v(t) + T_v \cdot dW_v(t)/dt = k_{W,v} \cdot (v(t) - v_0)$ | $W_p(t) + 2 \cdot T_p \cdot dW_p(t)/dt + T_p{}^2 \cdot d^2 W_p(t)/dt^2 = k_{W,p} \cdot (p(t) - p_0)$ |
| $k_{W,v} = -W_0/2 \cdot v_0$ | $k_{W,p} = -W_0/2 \cdot p_0 \cdot D_0/(D_0 - W_0) \cdot \log(1/Q_0)$ |

**Streckenmodell der Querschnittsfläche:**

$$A(t) = A_0 + A_v(t)$$

$$A_v(t) + T_v \cdot dA_v(t)/dt = k_{A,v} \cdot (v(t) - v_0)$$

$$k_{A,v} = -A_0/v_0$$

**Streckenmodell des Wanddicke-Durchmesser-Verhältnisses:**

$$Q(t) = Q_0 + Q_p(t), \text{ wobei } Q = W/D$$

$$Q_p(t) + 2 \cdot T_p \cdot dQ_p(t)/dt + T_p{}^2 \cdot d^2 Q_p(t)/dt^2 = k_{O,p} \cdot (p(t) - p_0)$$

$$k_{O,p} = -Q_0/p_0 \cdot \log(1/Q_N), \text{ wobei } Q_N = (W_0/D_0)/(W_{Roh}/D_{Roh})$$

wobei gilt:

t      Zeit bzw. Prozeßdauer
v      Abzugsgeschwindigkeit
v0      Arbeitspunkt der Abzugsgeschwindigkeit
p      Blasdruck
$p_0$      Arbeitspunkt des Blasdrucks

$D$     Durchmesser

$D_0$     Nominalmaß des Durchmessers

$D_{Roh}$     Durchmesser des Rohlings

$D_v$     Abzugsgeschwindigkeitsanteil des Durchmessers

$D_p$     Blasdruckanteil des Durchmessers

$W$     Wanddicke

$W_0$     Nominalmaß der Wanddicke

$W_{Roh}$     Wanddicke des Rohlings

$W_v$     Abzugsgeschwindigkeitsanteil der Wanddicke

$W_p$     Blasdruckanteil der Wanddicke

$A$     Querschnittsfläche

$A_0$     Nominalmaß der Querschnittsfläche

$A_v$     Abzugsgeschwindigkeit der Querschnittsfläche

$Q$     Wanddicke-Durchmesser-Verhältnis (= Ausziehverhältnis)

$Q_0$     Nominalmaß des Ausziehverhältnisses

$Q_p$     Blasdruckanteil des Ausziehverhältnisses

$Q_N$     Normiertes Nominalmaß des Ausziehverhältnisses

$k_{D,v}$     Übertragungsfaktor zwischen Abzugsgeschwindigkeit und Durchmesser

$k_{D,p}$     Übertragungsfaktor zwischen Blasdruck und Durchmesser

$k_{W,v}$     Übertragungsfaktor zwischen Abzugsgeschwindigkeit und Wanddicke

$k_{W,p}$     Übertragungsfaktor zwischen Blasdruck und Wanddicke

$k_{A,v}$     Übertragungsfaktor zwischen Abzugsgeschwindigkeit und Wanddicke

$k_{Q,p}$     Übertragungsfaktor zwischen Blasdruck und Nominalmaß des Ausziehverhältnisses

$T_v$     Zeitkonstante der Abzugsgeschwindigkeits-Dynamik

$t_p$     Zeitkonstante der Blasdruck-Dynamik

Eine Verfahrensweise, bei der als Regelgröße die Querschnittsfläche des Bauteils und als Stellgröße die Ziehgeschwindigkeit verwendet werden, ist besonders vorteilhaft bei einem rohrförmigen Bauteil anwendbar. Unter dem Ausdruck "Querschnittsfläche des Bauteils" wird dabei die Fläche eines Schnittes durch die Wandung des Bauteils senkrecht zur Ziehrichtung verstanden. Die Ziehgeschwindigkeit beeinflußt die Querschnittsfläche des Bauteils, jedoch nicht der im Inneren des rohrförmigen Bauteils angelegte Blasdruck. Daher wird umgekehrt in einer weiteren bevorzugten Verfahrensweise als Regelgröße das Wandstärke-/Außendurchmesser-Verhältnis oder das Wandstärke-/Innendurchmesser-Verhältnis, und als Stellgröße ein innerhalb des rohrförmigen Bauteils angelegter, regelbarer Blasdruck verwendet.

Die Querschnittsfläche bzw. das Wandstärke-/Durchmesser-Verhältnis dienen dabei als "Ersatzgrößen" für die Regelung der Wanddicke nach einem modellbasierten Verfahren. Die Prädiktion anhand der Messung der geometrischen Größe an der ersten Meßstelle im Bereich der Ziehzwiebel ist hierfür nicht unbedingt erforderlich. Allerdings ist durch eine Kombination der beiden Prädiktionsverfahren, nämlich der Prädiktion des Schätzwertes der Regelgröße anhand einer Messung der geometrischen Größe an einer ersten Meßstelle einerseits und der Prädiktion des Schätzwertes der Regelgröße anhand eines Streckenmodells unter Berücksichtigung der eingestellten Verfahrensparameter andererseits, sowohl im Falle der Querschnittsfläche als auch im Falle des Wanddicke-/Durchmesser-Verhältnisses, eine weitere Steigerung der Maßhaltigkeit erreichen.

Derartige Kombinations-Verfahren haben sich zur Herstellung von Rohren oder Hohlfasern, bei denen zur Gewährleistung der Maßhaltigkeit die Regelung mindestens zweier unterschiedlicher Regelgrößen erforderlich ist, bewährt. Bevorzugt werden hierbei die Kombinationen Außendurchmesser und Querschnittsfläche sowie Außendurchmesser und Wanddicke-/Außendurchmesser-Verhältnis. Andere Kombinationen sind allerdings denkbar und werden durch die Erfindung nicht ausgeschlossen.

Besonders bewährt hat es sich, zum Herstellen eines rohrförmigen Bauteils als erste Regelgröße den Außendurchmesser und als Stellgröße hierfür ein innerhalb des rohrförmigen Bauteils aufrecht erhaltenen Blasdruck, und als zweite Regelgröße die Querschnittsfläche der Wandung des Bauteils und als Stellgröße hierfür die Ziehgeschwindigkeit zu verwenden.

In einer hierzu alternativen bevorzugten Verfahrensweise zum Herstellen eines rohrförmigen Bauteils wird als erste Regelgröße der Außendurchmesser und als Stellgröße hierfür die Ziehgeschwindigkeit, und als zweite Regelgröße das Verhältnis von Wandstärke zu Außendurchmesser des Bauteils und als Stellgröße hierfür ein innerhalb des rohrförmigen Bauteiles aufrecht erhaltener Blasdruck verwendet.

Da sich die beiden Regelkreis im allgemeinen gegenseitig beeinflussen, wird vorteilhafterweise eine statische oder dynamische Entkopplung der beiden Regelkreise vorgesehen. Bei der dynamischen Entkopplung wird, im Gegensatz zur statischen Entkopplung, das unterschiedliche Zeitverhalten des Einflusses der jeweiligen Stellgrößen auf die Regelgrößen berücksichtigt.

Als besonders geeignet zur Herstellung maßgenauer Bauteile hat sich ein Verfahren erwiesen, bei dem für die Regelung Fuzzy-Logic-Regler eingesetzt werden. Dadurch lassen sich heuristische Regelstrategien in die Regelung mit einbeziehen.

Andererseits wird die oben angegebene Aufgabe hinsichtlich des Verfahrens, ausgehend von dem eingangs genannten Verfahren auch dadurch gelöst, daß die Temperatur der Ziehzwiebel gemessen und als Regelgröße verwendet wird.

Veränderungen der Ziehzwiebeltemperatur, etwa während der Anfahrphase oder in der Endphase des Ziehvorganges, werden durch das erfindungsgemäße Verfahren erkannt und können dann durch eine Korrektur der Temperatur der Heizeinrichtung kompensiert werden. Dabei ist zu beachten, daß maßgeblich für das Verformungsverhalten des Glases dessen Temperatur im Bereich der Ziehwiebel ist und nicht die Temperatur der Heizeinrichtung. Aus einer höheren Konstanz der Ziehzwiebeltemperatur resultiert eine höhere Konstanz des dynamischen Verformungsverhaltens und somit eine deutliche Verbesserung der Maßhaltigkeit des Bauteils. Dabei kann die Temperatur der Ziehzwiebel sowohl alternativ zur Temperatur der Heizeinrichtung als auch in Verbindung mit dieser Temperatur als Regelgröße verwendet werden.

In einer bevorzugten Verfahrensweise wird zusätzlich die Temperatur der Heizeinrichtung gemessen und in einer Kaskadenregelung die Temperatur der Ziehzwiebel als Hauptregelgröße und die Temperatur der Heizeinrichtung als Hilfsregelgröße verwendet. Üblicherweise reagiert die Temperatur der Heizeinrichtung rasch auf Änderungen des entsprechenden Temperaturreglers, während sich die Temperatur der Ziehzwiebel aufgrund von Änderungen der Umgebungstemperatur nur langsam ändert. Die letztgenannte Variante hat hinsichtlich des Regelverhaltens daher den Vorteil, daß sowohl eine Regelstrecke mit einer sehr geringen Integrationszeit zur hochkonstanten Regelung der Temperatur der Heizeinrichtung, als auch eine Regelstrecke mit einer sehr großen Integrationszeit zur reproduzierbaren Viskositätsbestimmung im Verformungsbereich verwendet werden kann. Vorteilhafterweise wird die Temperatur der Ziehzwiebel mittels Pyrometer gemessen.

Hinsichtlich der Vorrichtung wird die oben angegebene Aufgabe ausgehend von der eingangs genannten Vorrichtung erfindungsgemäß dadurch gelöst, daß zum Erfassen der geometrischen Größe des Bauteils eine Meßeinrichtung, der eine Meßstelle im erweichten Bereich des Rohlings zuzuordnen ist, vorgesehen ist.

Die erfindungsgemäße Anordnung der Meßeinrichtung erlaubt eine totzeitfreie Messung der geometrischen Größe des Bauteils. Die Meßeinrichtung erfaßt die geometrische Größe des Bauteils, beispielsweise den Außendurchmesser oder die Wandstärke im erweichten Bereich. Das bedeutet zwar, daß das Bauteil sich noch verformt, so daß der gemessene Wert der geometrischen Größe nicht mit dem endgültigen, tatsächlichen Wert der geometrischen Größe übereinstimmen muß. Mittels des totzeitfrei gemessenen Wertes der geometrischen Größe läßt sich aber, wie oben anhand der Beschreibung des erfindungsgemäßen Verfahrens erläutert, eine Vorhersage über den zu erwartenden Wert der endgültigen geometrischen Größe des Bauteils machen, der dann als Istwert der Regelgröße für die Prozeßregelung verwendet werden kann oder woraus ein solcher Istwert ableitbar ist.

Die Messung erfolgt berührungslos, so daß die Meßstelle am Bauteil, an der Meßwert gewonnen wird, von der Meßeinrichtung beabstandet ist. Bei den Meßeinrichtungen kann es sich um optische Geräte handeln, wie sie üblicherweise für Durchmesser-Messungen verwendet werden oder um Videokameras.

Besonders bewährt hat sich eine Vorrichtung mit zwei voneinander beabstandeten, mit der Regeleinrichtung verbundenen Meßeinrichtungen. Die Meßstellen der jeweiligen Meßeinrichtungen halten hierbei einen Abstand zueinander. Die Meßstelle der weiteren Meßeinrichtung liegt in einem Bereich, in dem das Bauteil sich nicht weiter verformt. Der dort gemessene Wert der geometrischen Größe dient der Kontrolle der Maßhaltigkeit. Es ist auch möglich, wie oben anhand der Verfahrensbeschreibung dargelegt, den gewonnenen Meßwert in der gemeinsamen Regeleinrichtung für die Prozeßregelung zu verarbeiten.

Vorteilhafterweise ist eine der Meßeinrichtungen in der Nähe des Heizelementes angeordnet. Dies vereinfacht die Justierung der Meßeinrichtung, insbesondere dann, wenn die Gefahr besteht, daß der erweichte Bereich des Rohlings, die Ziehzwiebel, ihre Lage im Verlauf des Prozesses verändert. Zweckmäßigerweise befindet sich die Meßeinrichtung außerhalb des Heizelementes, wobei im Heizelement mindestens eine Öffnung vorgesehen ist, durch die hindurch die Messung der geometrischen Größe berührungslos erfolgt. Dadurch läßt sich die Meßeinrichtung besonders dicht an den erweichten Bereich heranführen.

Bevorzugt werden Durchmesser-Meßeinrichtungen, wobei als geometrische Größe der Durchmesser des Bauteils oder, bei rohrförmigen Bauteilen, der Innendurchmesser oder die Wandstärke gemessen werden.

Bewährt hat sich auch eine Vorrichtung, bei der ein Pyrometer zur Messung der Temperatur des Rohlings im erweichten Bereich, also im Bereich der Ziehzwiebel, vorgesehen ist, wobei das Pyrometer mit der Regeleinrichtung verbunden ist. Die Temperatur der Ziehzwiebel wird vorteilhafterweise bei der Prozeßregelung berücksichtigt. Dadurch ermöglicht diese Vorrichtung eine wesentlich konstantere Prozeßführung, insbesondere bei Temperaturschwankungen wie bei Prozeßanfang oder bei Prozeßende.

Als besonders geeignet hat sich eine Vorrichtung erwiesen, bei der die Regeleinrichtung mit dem Abzug und/oder mit der Vorschubeinrichtung und/oder mit der Heizeinrichtung und/oder - bei hohlzylindrischen Bauteilen - mit einem Regelventil für den Innendruck des Bauteils verbunden ist.

Besonders bewährt hat sich eine Vorrichtung, bei der für die Regeleinrichtung Fuzzy-Logic-Regler eingesetzt werden. Dabei sind vorteilhafterweise alle Regler als Fuzzy-Logic-Regler ausgebildet.

Ausführungsbeispiele der Erfindung sind in der Zeichnung dargestellt und werden nachfolgend näher erläutert.

In der Zeichnung zeigen in schematischer Darstellung im einzelnen

**Figur 1** eine erfindungsgemäße Vorrichtung zum Ziehen eines Rohres in einem Längsschnitt und
**Figur 2** eine erfindungsgemäße Vorrichtung zum Ziehen einer Faser in einem Längsschnitt.

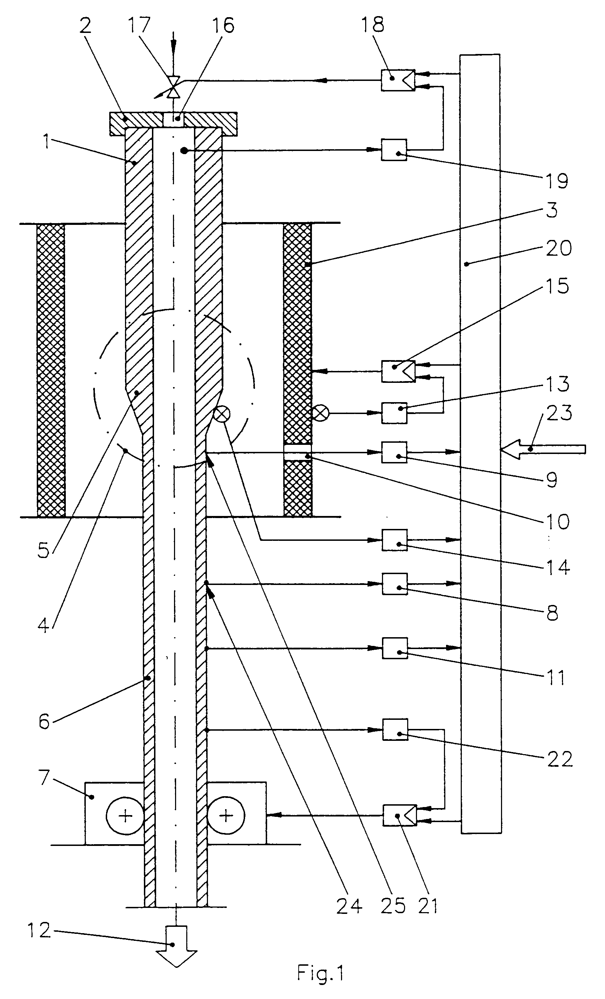

In der **Figur 1** ist die Bezugsziffer 1 einem hohlzylinderförmigen Quarzglasrohling zugeordnet, der an einem Träger 2 gehalten und mittels eines, in der Figur 1 nicht dargestellten Zuführeinrichtung kontinuierlich einem Ofen 3 zugeführt wird. Innerhalb des Ofens 3 wird der Rohling 1 von einem Ende beginnend bereichsweise erhitzt, so daß er sich in einer Verformungszone 4 erweicht und daraus unter Ausbildung einer Ziehzwiebel 5 ein Rohr 6 mittels eines Abzuges 7 abgezogen werden kann.

Zur Ermittlung des Außendurchmessers des Rohres 6 ist ein Durchmesser-Meßgerät 8 vorgesehen. Das Durchmesser-Meßgerät 8 befindet sich in einem gewissen Abstand zur Verformungszone 4. Der Abstand ist bedingt durch die Abziehstrecke bis zur vollständigen Erstarrung des Quarzglases. Abgesehen von geringfügigen Durchmesseränderungen des Rohres 6 durch das vollständige Abkühlen, mißt das Durchmesser-Meßgerät 8 den endgültigen Außendurchmesser des Rohres 6.

Zur Ermittlung des Rohrdurchmessers innerhalb der Verformungszone 4 ist ein erstes Durchmesser-Meßgerät 9 in unmittelbarer Nähe des Ofens 3 angeordnet. Das erste Durchmesser-Meßgerät 9 erfaßt den Rohr-Außendurchmesser im Bereich der Verformungszone 4 berührungslos durch eine im Ofen 3 vorgesehene Öffnung 10. Das erste Durchmesser-Meßgerät 9 ist im viskosen Auslaufbereich der Verformungszone 4, also im unteren Bereich der Ziehzwiebel 5, angeordnet. Mit den dort gemessenen Durchmesserwerten werden totzeitfreie Schätzwerte für den endgültigen Rohrdurchmesser prädiziert, also vorhergesagt, der ansonsten mit dem Durchmesser-Meßgerät 8 nur mit einer Meßtotzeit behaftet gemessen werden könnten.

Weiterhin ist zur Ermittlung der Wandstärke ein Wanddicken-Meßgerät 11 vorgesehen, das in Ziehrichtung (die mit dem Richtungspfeil 12 gekennzeichnet ist) gesehen, unterhalb des Durchmesser-Meßgerätes 8 angeordnet ist. Das Wanddicken-Meßgerät 11 arbeitet nach dem Reflexionsverfahren, wobei anhand des Abstandes der Reflexions-Peaks von innerer und äußerer Oberfläche des Rohres 6 dessen Wanddicke ermittelt wird.

Zur Messung der Temperatur des Ofens 3 dient ein erstes Pyrometer 13. Die Temperatur der Ziehzwiebel 5 wird mittels eines zweiten Pyrometers 14 gemessen. Die Temperaturreglung des Ofens 3 erfolgt mittels eines Temperaturreglers 15, wobei für die Temperaturregelung die vom zweiten Pyrometer 14 gemessene Ziehzwiebel-Temperatur als Hauptregelgröße und die vom ersten Pyrometer gemessene Temperatur als Hilfsregelgröße bei einer Kaskadenregelung berücksichtigt werden.

Der Träger 2 weist eine Bohrung 16 auf, die in das Rohrinnere mündet und durch die über ein Ventil 17 und einen Druckregler 18 Druckluft in das Innere des Rohres 6 geleitet werden kann. Der Innendruck innerhalb des Rohres 6 wird mittels eines Druckmeßgerätes 19 erfaßt.

Die Rohrabzugsgeschwindigkeit wird mittels eines Geschwindigkeitsmeßgerätes 22 erfaßt und über einen Geschwindiglkeitsregler 21 eingestellt.

Die den jeweiligen schematisch dargestellten Meßgeräten 8; 9; 13; 14; 19; 22 zugeordneten Meßstellen im Bereich des Rohres 6 bzw. des Ofens 3 sind durch die ihnen ausgehenden Verbindungslinien charakterisiert.

In eine zentrale Prozeßregelungseinrichtung 20 werden folgende Parameter eingespeist: Die vom Geschwindigkeitsmeßgerät erfaßte Rohrabzugsgeschwindigkeit, der vom Durchmesser-Meßgerät 8 gemessene Rohraußendurchmesser, der vom ersten Durchmesser-Meßgerät 9 gemessene Rohraußendurchmesser, die vom Wandstärken-Meßgerät 11 gemessene Rohr-Wandstärke, die vom ersten Pyrometer 13 gemessene Temperatur des Ofens 3, die vom Pyrometer 14 gemessene Temperatur der Ziehzwiebel 5 sowie der vom Druckmeßgerät 19 ermittelte Rohr-Innendruck. Die Prozeßregelungseinrichtung 20 steuert das Druckgasventil 18, den Temperaturregler 15 des Ofens 3 sowie den Regler 21 für den Abzug 7.

Der Prozeßregelungseinrichtung 20 können vorbestimmte Sollwerte, beispielsweise des Rohrinnendurchmessers, des Rohraußendurchmessers, der Wandstärke oder des Massendurchsatzes eingegeben werden, was schematisch durch den Eingabepfeil 23 dargestellt wird.

Nachfolgend wird ein Ausführungsbeispiel des erfindungsgemäßen Verfahrens anhand Figur 1 näher erläutert.

Bei der Verformung des Rohres 6 im Ofen 3 wird sowohl die Querschnittsfläche verringert, als auch das Wanddikken-Durchmesser-Verhältnis. Die Kräfte zur Verformung in axialer Richtung ergeben sich mittelbar aus der Differenz zwischen der hier fest vorgegebenen Vorschubgeschwindigkeit und der regelbaren Rohrabzugsgeschwindigkeit. Die Kräfte zur Verformung des Rohres 6 in radialer Richtung ergeben sich aus einem definierten Differenzdruck zwischen dem Rohrinneren und der Umgebung, der auch als Blasdruck bezeichnet wird.

Im ersten Ausführungsbeispiel wird der Quarzglasrohling dem Ofen 3 mit einer konstanten Vorschubgeschwindigkeit zugeführt, wobei die Temperatur des Ofens 3 zunächst auf ca. 2200 °C eingestellt wird. Als Regelgröße für die Temperaturregelung des Ofens dient die Temperatur der Ziehzwiebel 5, die mittels des Pyrometers 14 gemessen und auf einen Sollwert um 1800 °C eingestellt wird.

Als Regelgrößen der Prozeßregelung wird der Außendurchmesser des Rohres 6 sowie die Querschnittsfläche der Wandung des Rohres 6 verwendet. Als Stellgrößen werden für den Außendurchmesser der Blasdruck und für die Querschnittsfläche die Abzugsgeschwindigkeit verwendet.

Die Regelung auf den Führungswert der Querschnittsfläche wird nachfolgend erläutert:

An der Meßstelle 25 wird mittels des ersten Durchmesser-Meßgerätes 9 ein erster Wert des Rohr-Außendurchmessers gemessen. Die Wandstärke des Rohres 6 wird mittels des Wanddicken-Meßgerätes 22 ermittelt und daraus die Querschnittsfläche der Wandung berechnet. Daraus wird die Soll-Ist-Abweichung der Querschnittsfläche der Rohrwandung festgestellt und in eine erste fiktive Änderung der Rohrabzugsgeschwindigkeit umgesetzt. Anhand eines realitätsnahen Modells des Übertragungsverhältnisses zwischen Rohrabzugsgeschwindigkeit und der Querschnittsfläche der Rohrwandung, und der fiktiven Änderung der Rohrabzugsgeschwindigkeit sowie unter Berücksichtigung des Meßwertes der ersten Messung des Außendurchmessers an der ersten Meßstelle 25 wird ein Schätzwert für die Querschnittsfläche prädiziert, der dann als Istwert der Regelgröße zur weiteren Prozeßregelung verwendet wird.

Das hierzu verwendete realitätsnahe Modell läßt sich durch folgende Gleichung charakterisieren:
Modell der Querschnittsfläche:

$$y(t) + T \cdot dy(t)/dt = k \cdot u(t)$$

wobei "y" die Querschnittsfläche, "dy/dt" die zeitliche Änderung der Querschnittsfläche, "u" die Abzugsgeschwindigkeit, "t" die Zeit, "k" den Übertragungsfaktor und "T" die Zeitkonstante bezeichnet.

Der Istwert der Regelgröße wird dann nach folgender Gleichung berechnet:

$$y_{regel}(t) = y_{prädiziert}(t) + (y_{gemessen}(t) - y_{prädiziert}(t\text{-}T_{Tot})),$$

wobei "$y_{regel}$" den Istwert der Regelgröße, "$y_{prädiziert}$" den mittels des Streckenmodells und der gemessenen Abzugsgeschwindigkeit prädizierten Schätzwert der Querschnittsfläche, "$y_{gemessen}$" den aus den gemessenen Werten von Außendurchmesser und Wanddicke berechneten Wert der Querschnittsfläche, "t" die Zeit und "$T_{Tot}$" die Meßtotzeit bezeichnet.

Die Regelung auf den Führungswert des Außendurchmessers wird nachfolgend erläutert:

Zur Eliminierung der Meßtotzeit wird der Außendurchmesser des Rohres 6 abgeschätzt. Für diese Prädiktion des Rohr-Außendurchmessers wird zunächst der Durchmesser des Rohres 6 am oberen Meßpunkt 25 im Verformungsbereich 4 gemessen, und - über ein Schieberegister um die Meßtotzeit zwischen dem oberen Meßpunkt 25 und dem unteren Meßpunkt 24 verzögert - mit dem vom Durchmesser-Meßgerät 8 am unteren Meßpunkt 24 gemessenen Rohrdurchmesser verglichen.

Mittels eines Korrelationsmodells wird der Korrelationswert zwischen dem am oberen Meßpunkt 25 gemessenen Außendurchmesser und dem am unteren Meßpunkt gemessenen Außendurchmesser ermittelt, der dann für jeden weiteren vom ersten Durchmesser-Meßgerät 9 gemessenen Außendurchmesser für die Prädiktion des endgültigen Rohr-Außendurchmessers genutzt werden kann.

Das hierzu verwendete Prädiktionsmodell läßt sich durch folgende Gleichung beschreiben:

$$a_0(t) = y_2(t) - a_1 \cdot y_1(t\text{-}T_{Tot}),$$

wobei "$y_1$" den Meßwert des Außendurchmessers an der ersten Meßstelle, "$y_2$" den Meßwert des Außendurchmessers an der zweiten Meßstelle, "$a_0$" den zu ermittelnden, zeitvarianten Korrelationswert, "$a_1$" einen zeitinvarianten Parameter, "t" die Zeit und "$T_{Tot}$" die Meßtotzeit bezeichnet.

Der Istwert der Regelgröße des Außendurchmessers wird dann nach folgender Gleichung berechnet:

$$y_{regel}(t) = a_1 \cdot y_1(t) + (y_2(t) - a_1 \cdot y_1(t\text{-}T_{Tot}))$$

wobei "$y_{regel}$" den Istwert der Regelgröße bezeichnet.

Die vorteilhafte Wirkung der Erfindung besteht in einer deutlichen Verbesserung der Maßhaltigkeit sämtlicher Abmessungen des Rohres 6 über den gesamten Rohrstrang, insbesondere auch der Rohr-Querschnittsfläche, sofern zur Regelung der totzeitfrei abgeschätzte Wert der Querschnittsfläche anstelle der vom Wanddicken-Meßgerätes 22 gemessenen tatsächlichen Wandstärke und der daraus berechneten Querschnittsfläche sowie der totzeitfrei abgeschätzte Wert des Außendurchmessers verwendet wird.

Die Verwendung dieser Kombination von Stellgrößen und Regelgrößen, nämlich der Regelung des Rohr-Außendurchmessers über den Blasdruck, kombiniert mit der Regelung der Querschnittsfläche über die Abzugsgeschwindigkeit, hat sich insbesondere bei dünnwandigen Rohren als sehr vorteilhaft erwiesen.

Eine weitere Verbesserung der Maßhaltigkeit des Rohres 6 wird durch die zusätzliche, vom Pyrometer 14 gelieferte Ziehzwiebel-Temperatur erreicht. Die Wirkung dieser Temperaturmessung besteht darin, daß instationäre Veränderungen der Verformungstemperatur, beispielsweise während der Anfahrphase oder der Endphase des Prozesses durch eine Temperaturänderung in der Verformungszone 4 erkannt und über eine Korrektur der Ofentemperatur kompensiert werden können. Daraus resultiert eine höhere Konstanz der Verformungstemperatur und somit eine höhere Konstanz des dynamischen Verformungsverhaltens und eine deutliche Verbesserung der Maßhaltigkeit.

In einem zweiten Ausführungsbeispiel wird der Quarzglasrohling dem Ofen 3 mit einer konstanten Vorschubgeschwindigkeit zugeführt, wobei die Temperatur des Ofens 3 zunächst auf 2000°C eingestellt wird. Als Regelgröße für die Temperaturregelung des Ofens dient die Temperatur der Ziehzwiebel 5, die mittels des Pyrometers 14 gemessen und auf einem Sollwert um 1800°C gehalten wird.

Als Regelgrößen der Prozeßregelung wird der Außendurchmesser des Rohres 6 sowie das Wanddicke-Durchmesser-Verhältnis des Rohres 6 verwendet. Als Stellgrößen werden für den Außendurchmesser die Abzugsgeschwindigkeit und für das Wanddicke-Durchmesser-Verhältnis der Blasdruck verwendet.

Die Regelung auf den Führungswert des Wanddicke-Durchmesser-Verhältnisses wird nachfolgend näher erläutert:

An der Meßstelle 25 wird mittels des ersten Durchmesser-Meßgerätes 9 ein erster Wert des Rohr-Außendurchmessers gemessen. Das Ausziehverhältnis wird mittels der vom Wanddicken-Meßgerät 22 und vom Durchmesser-Meßgerätes 8 ermittelt Meßwerte berechnet. Daraus wird die Soll-Ist-Abweichung des Ausziehverhältnisses festgestellt und in eine erste fiktive Änderung des Blasdruckes umgesetzt. Anhand eines realitätsnahen Modells des Übertragungsverhältnisses zwischen Ausziehverhältnis und dem Blasdruck, sowie der fiktiven Änderung des Blasdruckes, wird unter Berücksichtigung des Meßwertes der ersten Messung des Außendurchmessers an der ersten Meßstelle 25, ein Schätzwert für das Ausziehverhältnis prädiziert, der dann als Istwert der Regelgröße zur weiteren Prozeßregelung verwendet wird.

Modell des Wanddicke-Durchmesser-Verhältnisses:

$$y(t) + 2T \cdot dy(t)/dt + T^2 \cdot d^2y(t)/dt^2 = k \cdot u(t)$$

wobei "y" das Wanddicke-Durchmesser-Verhältnis, "dy/dt" die zeitliche Änderung der Wanddicke-Durchmesser-Verhältnis, "$d^2y/dt^2$" die zweite Ableitung des Wanddicke-Durchmesser-Verhältnisses nach der Zeit, "u" den Blasdruck, "t" die Zeit, "k" den Übertragungsfaktor und "T" die Zeitkonstante bezeichnet.

Die Art und Weise der Regelung auf den Führungswert des Außendurchmessers erfolgt analog zu dem anhand des ersten Ausführungsbeispieles bereits erläuterten Verfahren mit dem Unterschied, daß anstelle des Blasdruckes die Abzugsgeschwindigkeit als Stellgröße Anwendung findet.

Die Verwendung dieser Kombination von Stellgrößen und Regelgrößen, nämlich der Regelung des Außendurchmessers durch die Abzugsgeschwindigkeit und der Regelung des Wanddicke-Außendurchmesser-Verhältnisses durch den Blasdruck hat sich insbesondere bei dickwandigen Rohren als besonders vorteilhaft erwiesen.

In einem dritten Ausführungsbeispiel des erfindungsgemäßen Verfahrens wurden als Regelgröße sowohl die Querschnittsfläche des Rohres 6 als auch das Wandstärke-/Außendurchmesser-Verhältnis und als Stellgröße die Ziehgeschwindigkeit sowie der Blasdruck verwendet. Dabei beeinflußt die Ziehgeschwindigkeit in erster Linie die Querschnittsfläche der Rohr-Wandung jedoch nicht das Ausziehverhältnis, wogegen umgekehrt der Blasdruck das Ausziehverhältnis beeinflußt, jedoch nicht die Querschnittsfläche der Rohrwandung. Durch Kombination der beiden vorgenannten Regelmechanismen in einer Gesamtregelung, lassen sich daher sowohl die Querschnittsfläche der Rohr-Wandung, als auch das Ausziehverhältnis nahezu unabhängig voneinander regeln. Dabei wird eine dynamische Entkopplung der beiden Regelkreise vorgesehen.

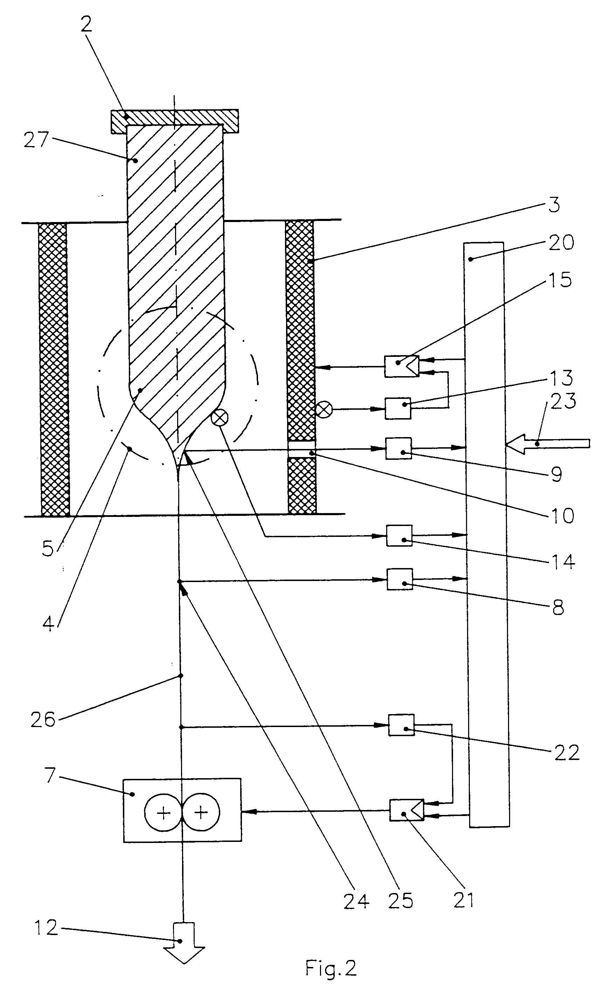

Die in **Figur 2** dargestellte Ausführungsform der erfindungsgemäßen Vorrichung dient zum Ziehen einer optischen Faser 26 aus einer vollzylindrischen Vorform 27. Soweit in dieser Figur die gleichen Bezugsziffern wie in Figur 1 verwendet sind, betreffen diese gleiche oder äquivalente Bauteile, wie sie anhand Figur 1 erläutert sind.

Zur Ermittlung des Durchmessers der Faser 26 ist eine Videokamera 8 in einem Bereich außerhalb der Verformungszone 4 vorgesehen. Zur Ermittlung des Faserdurchmessers innerhalb der Verformungszone 4 ist ein Durchmesser-Meßgerät 9 in unmittelbarer Nähe des Ofens 3 angeordnet. Das Durchmesser-Meßgerät 9 erfaßt den Faserdurchmesser im Bereich der Verformungszone 4 berührungslos durch eine im Ofen 3 vorgesehene Öffnung 10.

Zur Messung der Temperatur des Ofens 3 dient ein erstes Pyrometer 13. Die Temperatur der Ziehzwiebel 5 wird mittels eines zweiten Pyrometers 14 gemessen. Die Temperaturreglung des Ofens 3 erfolgt mittels eines Temperaturreglers 15, der in einer Kaskadenregelung die Temperatur der Ziehzwiebel 5 als Hauptregelgröße und die Temperatur des Ofens 3 als Hilfsregelgröße berücksichtigt.

Die Faserabzugsgeschwindigkeit wird mittels eines Geschwindigkeitsmeßgerätes 22 erfaßt und über einen Geschwindigkeitsregler 21 eingestellt.

Die den jeweiligen schematisch dargestellten Meßgeräten 8; 9; 13; 14; 15; 22 zugeordneten Meßstellen im Bereich der Faser 26 bzw. des Ofens 3 sind durch die Berührungspunkte der von ihnen ausgehenden Verbindungslinien und die Oberfläche des zu messenden Objektes 3; 26; 27 charakterisiert.

In die zentrale Prozeßregelungseinrichtung 20 werden folgende Parameter eingespeist: Die vom Geschwindigkeitsmeßgerät 22 erfaßte Faserziehgeschwindigkeit, der von der Videokamera 8 gemessene Faserdurchmesser, der vom zweiten Durchmesser-Meßgerät 9 gemessene Faserdurchmesser, die vom ersten Pyrometer 13 gemessene Temperatur des Ofens 3, sowie die vom zweiten Pyrometer 14 gemessene Temperatur der Ziehzwiebel 5. Die Prozeßregelungseinrichtung 20 steuert den Temperaturregler 15 des Ofens 3 sowie den Regler 21 für den Abzug 7.

Die erfindungsgemäße Vorrichtung erlaubt eine totzeitfreie Vorhersage des tatsächlichen Faserdurchmessers, wodurch eine deutliche Verbesserung der Maßhaltigkeit des Faserdurchmessers ermöglicht wird. Das erfindungsgemäße Verfahren zum Ziehen der Faser 26 wird nachfolgend an einem Ausführungsbeispiel erläutert:

Als Regelgröße der Prozeßregelung wird der Durchmesser der Faser 26 verwendet. Der Sollwert des Faserdurchmessers beträgt 127 µm. Als Stellgröße dient die Faserziehgeschwindigkeit. Die Regelung auf den Führungswert des Faserdurchmessers wird nachfolgend näher erläutert:

An der Meßstelle 25 wird mittels des ersten Durchmesser-Meßgerätes 9 ein erster Wert des Faserdurchmessers gemessen. Dieser Meßwert dient zur Prädiktion des zu erwartenden Faserdurchmessers. Für die Prädiktion wird dieser Meßwert - über ein Schieberegister um die Meßtotzeit zwischen dem oberen Meßpunkt 25 und dem unteren Meßpunkt 24 verzögert - mit dem vom Durchmesser-Meßgerät 8 am unteren Meßpunkt 24 gemessenen Faserdurchmesser verglichen. Als Differenz oder als Quotient der Meßwerte wird der Korrelationswert zwischen dem am oberen Meßpunkt 25 gemessenen Faserdurchmesser und dem am unteren Meßpunkt 24 gemessenen Faserdurchmesser ermittelt, der dann für jeden weiteren vom ersten Durchmesser-Meßgerät 9 gemessene Faserdurchmesser für die Prädiktion des endgültigen Faserdurchmessers genutzt werden kann. Weiterhin wird der Prädiktion des Schätzwertes für den Faserdurchmesser ein Streckenmodell zugrunde gelegt, das dem in anhand Figur 1 für den Rohraußendurchmesser erläuterten entspricht.

Für die Ermittlung des Korrelationswertes, der in regelmäßigen Zeitabständen von 0,01 Sekunden aktualisiert wird, werden zusätzlich die aktuellen Werte der Faserziehgeschwindigkeit berücksichtigt.

Das erfindungsgemäße Verfahren erlaubt eine totzeitfreie Vorhersage des zu erwartenden Faserdurchmessers. Die vorteilhafte Wirkung der Erfindung besteht in einer deutlichen Verbesserung der Maßhaltigkeit der Faser 26, sofern zur Regelung der totzeitfrei abgeschätzte Wert des Faserdurchmessers anstelle des vom Durchmesser-Meßgerät 8 gemessenen tatsächlichen Faserdurchmessers verwendet wird.

Eine weitere Verbesserung der Maßhaltigkeit des Faserdurchmessers wird durch die zusätzliche vom Pyrometer 14 gelieferte Ziehzwiebel-Temperatur erreicht. Die Wirkung dieser Temperaturmessung besteht darin, daß instationäre Veränderungen der Verformungstemperatur, beispielsweise während der Anfahrphase oder der Endphase des Prozesses, durch eine Temperaturänderung in der Verformungszone 4 erkannt und über eine Korrektur der Ofentemperatur kompensiert werden können. Daraus resultiert eine höhere Konstanz der Verformungstemperatur und somit eine höhere Konstanz des dynamischen Verformungsverhaltens und eine deutliche Verbesserung der Maßhaltigkeit.

Sämtliche Regler der Regeleinrichtung 20 sind als Fuzzy-Logic-Regler ausgestaltet.

Ein weiteres Ausführungsbeispiel des erfindungsgemäßen Verfahrens, das die Temperaturregelung betrifft wird nachfolgend anhand Figur 1 näher erläutert.

Das Verfahren wird zur Herstellung eines Rohres 6 angewandt. Die zum Ziehen des Rohres eingestellten Verfahrensparameter sind die gleichen, wie sie oben zur Erläuterung der ersten Verfahrensvariante zu Figur 1 bereits genannt sind. Zur Verbesserung der Temperaturregelung und des dynamischen Verformungsverhaltens und damit der Maßhaltigkeit des Rohres wird in einer Kaskadenregelung die Temperatur der Ziehzwiebel 5 als Hauptregelgröße und die Temperatur des Ofens 3 als Hilfsregelgröße für die Regelung verwendet.

Hierzu wird der Regeleinrichtung 20 eine Soll-Temperatur für die Ziehzwiebel 5 von ca. 1850°C vorgegeben. Die Temperatur der Ziehzwiebel 5 wird mittels eines Pyrometers 14 gemessen, die Soll-Ist-Abweichung festgestellt und der Temperaturregler 15 für den Ofen 3 so angesteuert, daß die Ziehzwiebel-Temperatur konstant gehalten wird.

Veränderungen der Ziehzwiebeltemperatur, etwa während der Anfahrphase oder in der Endphase des Ziehvorganges, werden durch das erfindungsgemäße Verfahren erkannt und können dann durch eine Korrektur der Temperatur der Heizeinrichtung kompensiert werden.

Bei den vorgenannten Ausführungsbeispielen werden als Regler, außer für die Temperatur, Fuzzy-Logic-Regler eingesetzt. Dadurch kann heuristisches Expertenwissen bei der Regelung berücksichtigt werden.

**Patentansprüche**

1. Verfahren zum Herstellen eines langgestreckten Bauteils aus Glas durch Ziehen aus einem Rohling, bei welchem der Rohling einer Heizzone zugeführt, dort bereichsweise erweicht, und aus dem erweichten Bereich unter Ausbildung einer Ziehzwiebel das Bauteil kontinuierlich und geregelt abgezogen wird, wobei totzeitfreie Schätzwerte mindestens einer Regelgröße prädiziert werden, weiterhin mindestens eine mit der Regelgröße korrelierbare geometrische Größe des Bauteils fortlaufend gemessen und die so ermittelten Meßwerte zum Abgleich der prädizierten Schätzwerte verwendet werden, und anhand der so abgeglichenen prädizierten Schätzwerte die Soll-Ist-Abweichung der Regelgröße bestimmt und in eine Änderung einer Stellgröße umgesetzt wird, dadurch gekennzeichnet, daß für die Prädiktion des Schätzwertes eine Messung der geometrischen Größe an einer ersten Meßstelle (25) im Bereich der Ziehzwiebel (5) herangezogen wird.

2. Verfahren nach Anspruch 1, dadurch gekennzeichnet, daß die Prädiktion des Schätzwertes folgende Verfahrensschritte umfaßt:

a) eine erste Messung der geometrischen Größe an der ersten Meßstelle,
b) eine zweite Messung der geometrischen Größe an einer zweiten Meßstelle (24), die der ersten Meßstelle (25), in Ziehrichtung (12) gesehen, um einen festen Meßstellen-Abstand nachgeordnet ist, und zwar nach Ablauf einer Zeitspanne, die sich aus dem Verhältnis des Meßstellen-Abstandes und der Ziehgeschwindigkeit ergibt,
c) Ermitteln eines Korrelationswertes aus der ersten und aus der zweiten Messung ,
d) erneute Messung der geometrischen Größe an der ersten Meßstelle (25) und
e) Prädiktion des Schätzwertes anhand dem gemäß d) gemessenen Meßwert und aus dem Korrelationswert.

3. Verfahren nach Anspruch 2, dadurch gekennzeichnet, daß das Ermitteln des Korrelationswertes nach Verfahrensschritt c) zusätzlich anhand gemessener oder eingestellter Werte der Stellgröße erfolgt.

4. Verfahren nach einem der vorhergehenden Ansprüche, dadurch gekennzeichnet, daß der Korrelationswert in regelmäßigen Zeitabständen, vorzugsweise im Bereich von 0,5 bis 5 Sekunden, aktualisiert wird.

5. Verfahren nach einem der vorhergehenden Ansprüche, dadurch gekennzeichnet, daß als Regelgröße der Außendurchmesser des Bauteils (6; 26), und/oder bei einem rohrförmigen Bauteil (6) der Innendurchmesser und/oder die Wandstärke verwendet wird.

6. Verfahren nach Anspruch 1, dadurch gekennzeichnet, daß zum Herstellen eines rohrförmigen Bauteils mindestens eine erste und eine zweite Regelgröße vorgesehen sind und daß die Prädiktion des Schätzwertes der zweiten Regelgröße anhand gemessener oder eingestellter Werte mindestens einer Stellgröße der Regelung und unter Anwendung eines Streckenmodells erfolgt und folgende Verfahrensschritte umfaßt:

a) eine erste Messung der geometrischen Größe zur Ermittlung eines ersten Wertes der zweiten Regelgröße,
b) Ermittlung der Soll-Ist-Abweichung der nach a) ermittelten Regelgröße,
c) Umsetzten in eine fiktive Änderung des Stellwertes der Stellgröße,
d) Bereitstellen eines realitätsnahen Streckenmodells des Übertragungsverhältnisses zwischen Stellgröße und zweiter Regelgröße, und
e) Prädiktion des Schätzwertes anhand der fikiven Änderung des Stellwertes und dem Streckenmodell gemäß d) unter Verwendung des Meßwertes der ersten Messung der geometrischen Größe an der ersten Meßstelle (25).

7. Verfahren nach Anspruch 6, dadurch gekennzeichnet, daß als zweite Regelgröße die Querschnittsfläche des Bauteils (6) und als Stellgröße die Ziehgeschwindigkeit verwendet wird.

8. Verfahren nach Anspruch 6, dadurch gekennzeichnet, daß als zweite Regelgröße das Wandstärke-Außendurchmesser-Verhältnis oder das Wandstärke-/Innendurchmesser-Verhältnis, und als Stellgröße ein innerhalb des rohrförmigen Bauteils (6) angelegter, regelbarer Blasdruck verwendet wird.

9. Verfahren nach Anspruch 6 und einem der Ansprüche 1 bis 5 oder 7 bis 8, dadurch gekennzeichnet, daß zum Herstellen eines rohrförmigen Bauteils (6) als erste Regelgröße der Außendurchmesser und als Stellgröße hierfür ein innerhalb des rohrförmigen Bauteils (6) aufrecht erhaltener Blasdruck, und als zweite Regelgröße die Querschnittsfläche der Wandung des Bauteils (6) und als Stellgröße hierfür die Ziehgeschwindigkeit verwendet werden.

10. Verfahren nach Anspruch 6 und einem der Ansprüche 1 bis 5 oder 7 bis 8, dadurch gekennzeichnet, daß zum Herstellen eines rohrförmigen Bauteils (6) als erste Regelgröße der Außendurchmesser und als Stellgröße hierfür die Ziehgeschwindigkeit, und als zweite Regelgröße das Verhältnis von Wandstärke zu Außendurchmesser des Bauteils (6) und als Stellgröße hierfür ein innerhalb des rohrförmigen Bauteiles (6) aufrecht erhaltener Blasdruck verwendet werden.

11. Verfahren nach Anspruch 10 oder 11, dadurch gekennzeichnet, daß zur Regelung der beiden unterschiedlichen Regelgrößen eine Entkopplung der jeweiligen Regelkreise vorgesehen wird.

12. Verfahren nach einem der vorhergehenden Ansprüche, dadurch gekennzeichnet, daß für die Regelung Fuzzy-Logic-Regler eingesetzt werden.

13. Verfahren zum Herstellen eines langgestreckten Bauteils aus Glas durch Ziehen aus einem Rohling, bei welchem der Rohling einer Heizeinrichtung zugeführt, dort bereichsweise erweicht, und aus dem erweichten Bereich unter Ausbildung einer Ziehzwiebel das Bauteil kontinuierlich und geregelt abgezogen wird, wobei mindestens eine Regelgröße der Prozeßregelung fortlaufend gemessen, aus den so ermittelten Meßwerten die Soll-Ist-Abweichung der Regelgröße bestimmt und in eine Änderung einer Stellgröße umgesetzt wird, dadurch gekennzeichnet, daß die Temperatur der Ziehzwiebel (5) gemessen und als Regelgröße verwendet wird

14. Verfahren nach Anspruch 13, dadurch gekennzeichnet, daß die Temperatur der Heizeinrichtung gemessen wird, und daß in einer Kaskadenregelung die Temperatur der Ziehzwiebel als Hauptregelgröße und die Temperatur der Heizeinrichtung als Hilfsregelgröße verwendet wird.

15. Vorrichtung für die Herstellung eines langgestreckten Bauteils aus Glas durch Ziehen aus einem Rohling, mit einer Vorschubeinrichtung zum Zuführen des Rohlings zu einer Heizeinrichtung, mit einem Abzug zum Abziehen des Bauteils aus einem in der Heizeinrichtung erweichten Bereich des Rohlings, mit einer Meßeinrichtung zum Erfassen einer geometrischen Größe des aus dem Rohling abgezogenen Bauteils, die mit einer Regeleinrichtung verbunden ist, in der die Soll-Ist-Abweichung von einer Regelgröße ermittelt und in Abhängigkeit davon eine Stellgröße eingestellt wird, dadurch gekennzeichnet, daß zum Erfassen der geometrischen Größe des Bauteils (6; 26) eine Meßeinrichtung (9), der eine Meßstelle (25) im erweichten Bereich (4) des Rohlings (1; 27) zuzuordnen ist, vorgesehen ist.

16. Vorrichtung nach Anspruch 14, dadurch gekennzeichnet, daß zum Erfassen der geometrischen Größe des Bauteils (6; 26) mindestens zwei mit der Regeleinrichtung (20) verbundene Meßeinrichtungen (8; 9; 22) vorgesehen sind.

17. Vorrichtung nach Anspruch 15 oder 16, dadurch gekennzeichnet, daß eine Meßeinrichtung (9) im Bereich des Heizelementes (3) angeordnet ist.

18. Vorrichtung nach Anspruch 17, dadurch gekennzeichnet, daß die Meßeinrichtung (9) außerhalb des Heizelementes (3) angeordnet ist und im Heizelement (3) mindestens eine Öffnung (10) vorgesehen ist, durch die hindurch die Messung der geometrischen Größe berührungslos erfolgt.

19. Vorrichtung nach einem der Ansprüche 15 bis 18, dadurch gekennzeichnet, daß ein mit der Regeleinrichtung (20) verbundenes Pyrometer (14) zur Messung der Temperatur des Rohlings (1; 27) im erweichten Bereich (4) vorgesehen ist.

20. Vorrichtung nach einem der Ansprüche 15 bis 19, dadurch gekennzeichnet, daß die Regeleinrichtung (20) Fuzzy-Logic-Regler umfaßt.

21. Vorrichtung nach Anspruch 20, dadaurch gekennzeichnet, daß sämtliche Regler als Fuzzy-Logic-Regler ausgebildet sind.

**Claims**

1. A method for the production of an elongated component of glass by drawing from a blank, in which the blank is supplied to a heating zone, is softened there in regions, and from the softened region, with the formation of a drawing bulb, the component is withdrawn continuously and in a regulated manner, in which estimated values, free of dead time, of at least one standard quantity are predicted, in addition at least one geometric dimension of the component, able to be correlated with the standard quantity, is measured continuously and the thus determined measured values are used for adjustment of the predicted estimated values, and with the aid of the thus adjusted predicted estimated values, the nominal/actual deviation of the standard quantity is determined and converted into an alteration of a regulated quantity, characterised in that for the prediction of the estimated value, a measurement of the geometric dimension is referred to at a first measurement point (25) in the region of the drawing bulb (5).

2. A method according to Claim 1, characterised in that the prediction of the estimated value comprises the following process steps:

a) a first measurement of the geometric dimension at the first measurement point,

b) a second measurement of the geometric dimension at a second measurement point (24), which, viewed in drawing direction (12), is arranged after the first measurement point (25) by a fixed measurement point spacing, and namely after a time interval has elapsed which results from the ratio of the measurement point spacing and the drawing speed,

c) determining of a correlation value from the first and from the second measurement,

d) further measurement of the geometric dimension at the first measurement point (25) and

e) prediction of the estimated value with the aid of the measured value measured according to d) and from the correlation value.

3. A method according to Claim 2, characterised in that the determining of the correlation value according to method step c) in addition takes place with the aid of measured or adjusted values of the regulated quantity.

4. A method according to one of the preceding claims, characterised in that the correlation value is actualised at regular time intervals, preferably in the range of 0.5 to 5 seconds.

5. A method according to one of the preceding claims, characterised in that as standard quantity the external diameter of the component (6; 26), and/or with a tubular component (6) the internal diameter and/or the wall thickness is used.

6. A method according to Claim 1, characterised in that for the production of a tubular component at least a first and a second standard quantity are provided, and that the prediction of the estimated value of the second standard quantity takes place with the aid of measured or adjusted values at least of one regulated quantity of regulation and with the use of a distance model and comprises the following method steps:

a) a first measurement of the geometric dimension to determine a first value of the second standard quantity,

b) determining the nominal/actual deviation of the standard quantity determined according to a),

c) converting into a fictive alteration of the nominal value of the regulated quantity,

d) making available a distance model, close to reality, of the transmission ratio between regulated quantity and second standard quantity, and

e) prediction of the estimated value with the aid of the fictive alteration of the nominal value and the distance model according to d) using the measured value of the first measurement of the geometric dimension at the first measurement point (25).

7. A method according to Claim 6, characterised in that as second standard quantity, the cross-sectional area of the component (6) is used, and the drawing speed is used as regulated quantity.

8. A method according to Claim 6, characterised in that as second standard quantity the wall thickness/external diameter ratio or the wall thickness/internal diameter ratio is used, and as regulated quantity a blast pressure is used which is able to be regulated and is applied inside the tubular component (6).

9. A method according to Claim 6 and one of Claims 1 to 5 or 7 to 8, characterised in that for the production of a tubular component (6), as first standard quantity the external diameter is used and as regulated quantity for this, a blast pressure, maintained within the tubular component (6), is used and as second standard quantity the cross-sectional area of the wall of the component (6) is used and as regulated quantity for this the drawing speed is used.

10. A method according to Claim 6 and one of Claims 1 to 5 or 7 to 8, characterised in that for the production of a tubular component (6), as first standard quantity the external diameter is used and as regulated quantity for this the drawing speed is used, and as second standard quantity the ratio of wall thickness to external diameter of the component (6) is used and as regulated quantity for this a blast pressure, maintained within the tubular component (6), is used.

11. A method according to Claim 10 or, 11, characterised in that to regulate the two different standard quantities, an uncoupling of the respective control loops is provided.

12. A method according to one of the preceding claims, characterised in that fuzzy logic regulators are used for regulation.

13. A method for the production of an elongated component of glass by drawing from a blank, in which the blank is supplied to a heating device, is softened there in regions, and the component is withdrawn continuously and in a regulated manner from the softened region, with the formation of a drawing bulb, wherein at, least one standard quantity of the process regulation is measured continuously, from the thus determined measured values the nominal/actual deviation of the standard quantity is determined and converted to an alteration of a regulated quantity, characterised in that the temperature of the drawing bulb (5) is measured and used as standard quantity.

14. A method according to Claim 13, characterised in that the temperature of the heating device is measured, and that in a cascade regulation the temperature of the drawing bulb is used as main standard quantity and the temperature of the heating device is used as auxiliary standard quantity.

15. A device for the production of an elongated component of glass by drawing from a blank, with an advance device for supplying the blank to a heating device, with an outlet for the withdrawal of the component from a region of the blank which is softened in the heating device, with a measurement device to pick up a geometric quantity of the component withdrawn from the blank, which is connected with a regulating device, in which the nominal/actual deviation from a standard quantity is determined and as a function thereof a regulated quantity is set, characterised in that to pick up the geometric dimension of the component (6; 26) a measurement device (9) is provided, with which a measurement point (25) in the softened region (4) of the blank (1; 27) is to be associated.

16. A device according to Claim 14, characterised in that to pick up the geometric dimension of the component (6; 26), at least two measurement devices (8; 9; 22) are provided which are connected with the regulating device (20).

17. A device according to Claim 15 or 16, characterised in that a measurement device (9) is arranged in the region of the heating element (3).

18. A device according to Claim 17, characterised in that the measurement device (9) is arranged outside the heating element (3) and in the heating element (3) at least one opening (10) is provided, through which the measurement of the geometric dimension takes place in a non-contact manner.

19. A device according to one of Claims 15 to 18, characterised in that a pyrometer (14), connected with the regulating device (20), is provided to measure the temperature of the blank (1; 27) in the softened region (4).

20. A device according to one of Claims 15 to 19, characterised in that the regulating device (20) comprises fuzzy logic regulators.

21. A device according to Claim 20, characterised in that all regulators are constructed as fuzzy logic regulators.

**Revendications**

1. Procédé pour la fabrication d'un corps allongé en verre par étirage d'une préforme, selon lequel la préforme est amenée à une zone de chauffe pour y être ramollie par zone et selon lequel à partir de la zone ramollie, ce corps est étiré en formant un oignon d'étirage de manière continue et régulée, les valeurs d'estimation sans temps mort étant prédéterminées au moyen d'une grandeur de réglage, au moins une grandeur géométrique du corps, qui peut être mise en corrélation avec la grandeur de réglage, étant mesurée en continu et la valeur de mesure ainsi déterminée étant utilisée pour la compensation avec les valeurs corrigées estimées par prédiction, selon lequel à l'aide des valeurs corrigées estimées par prédiction, on définit la divergence théorique et effective de la grandeur de réglage et on la convertit en une modification d'une grandeur de réglage, caractérisé en ce que pour la prédiction de la valeur d'estimation on a recours à une mesure de la grandeur géométrique à un premier point de mesure (25) dans la zone de l'oignon d'étirage (5).

2. Procédé selon la revendication 1, caractérisé en ce que la prédiction de la valeur d'estimation comprend les étapes de procédé suivantes

   a)une première mesure de la grandeur géométrique au premier point de mesure,

   b)une seconde mesure de la grandeur géométrique a un second point de mesure (24) qui est placé après le premier point de mesure (25), vu dans le sens d'étirage (12), un écart fixe étant maintenu entre les deux points de mesure et, ce, après écoulement d'une période de temps qui résulte du rapport entre l'écart des points de mesure et la vitesse d'étirage,

   c)Détermination d'une valeur de corrélation à partir de la première et seconde mesures,

   d)mesure à nouveau de la grandeur géométrique au premier point de mesure (25) et

   e)Prédiction de la valeur d'estimation à l'aide de la valeur mesurée en d) et de la valeur de corrélation.

3. Procédé selon la revendication 2, caractérisé en ce que la détermination de la valeur de corrélation s'effectue en supplément après l'étape de procédé c) à l'aide des valeurs mesurées ou réglées de la grandeur de réglage.

4. Procédé selon l'une des revendications précédentes, caractérisé en ce que la valeur de corrélation est actualisée à intervalles temporels réguliers, de préférence entre 0,5 et 5 secondes.

5. Procédé selon l'une des revendication précédente, caractérisé en ce que le diamètre externe du corps (6; 26) et/ou le diamètre interne et/ou l'épaisseur de paroi dans le cas d'un corps tubulaire (6) sont utilisés comme grandeur de réglage.

6. Procédé selon la revendication 1, caractérisé en ce que pour la fabrication d'un corps tubulaire, il est prévu une première et une seconde grandeur de réglage et en ce que la prédiction de la valeur d'estimation de la seconde grandeur de réglage s'effectue à l'aide des valeurs mesurées ou ajustées d'au moins une grandeur de réglage de la régulation en appliquant un modèle d'étirement et comprend les étapes de procédé suivantes :

   a) une première mesure de la grandeur géométrique pour la détermination d'une première valeur de la seconde grandeur de réglage,

   b) Détermination de la divergence théorique et effective de la grandeur de réglage définie en a)

   c) conversion en une modification fictive de la valeur de réglage de la grandeur de réglage,

   d) Mise à disposition d'un modèle d'étirement proche de la réalité du rapport de transmission entre la grandeur de réglage et la seconde grandeur de réglage, et

   e) Prédiction de la valeur d'estimation à l'aide de la modification fictive de la valeur de réglage et du modèle d'étirement selon d) en utilisant la valeur de la première mesure de la grandeur géométrique au premier point de mesure (25).

7. Procédé selon la revendication 6, caractérisé en ce qu'on utilise en tant que seconde grandeur de réglage la surface de section transversale du corps (6) et en tant que valeur d'ajustement la vitesse d'étirage.

8. Procédé selon la revendication 6, caractérisé en ce qu'en tant que seconde grandeur de réglage, on utilise le rapport entre l'épaisseur de paroi et le diamètre externe ou le rapport entre l'épaisseur de paroi et le diamètre interne et en tant que grandeur d'ajustement une pression de soufflage régulable et appliquée à l'intérieur du corps tubulaire (6).

9.  Procédé selon la revendication 6 et l'une des revendications 1 à 5 ou 7 à 8, caractérisé en ce que pour la fabrication d'un corps tubulaire (6), on utilise en tant que première grandeur de réglage, le diamètre interne et en tant que grandeur d'ajustement une pression de soufflage maintenue verticalement à l'intérieur du corps tubulaire (6) et en tant que seconde grandeur de réglage la surface de section transversale de la paroi du corps (6) et en tant que grandeur d'ajustement la vitesse de tirage.

10. Procédé selon la revendication 6 et l'une des revendications 1 à 5 ou 7 à 8, caractérisé en ce que pour la fabrication d'un corps tubulaire (6) on utilise en tant que première grandeur de réglage le diamètre externe et en tant que grandeur d'ajustement la vitesse de tirage et en tant que seconde grandeur de réglage, le rapport entre l'épaisseur de paroi et le diamètre externe du corps (6) et en tant que grandeur d'ajustement une pression de soufflage maintenue verticalement à l'intérieur du corps tubulaire (6).

11. Procédé selon la revendication 10 ou 11, caractérisé en ce que pour la régulation des deux grandeurs de réglage différentes, il est prévu une neutralisation des circuit de réglage respectifs.

12. Procédé selon l'une des revendications précédentes, caractérisé en ce qu'on a recours à un régulateur Fuzzy-Logic.

13. Procédé pour la fabrication d'un corps allongé en verre par étirage d'une préforme, selon lequel la préforme est amenée à une zone de chauffe pour y être ramollie par zone et selon lequel à partir de la zone ramollie, ce corps est étiré en formant un oignon d'étirage de manière continue et régulée, au moins une grandeur de réglage de la régulation du processus étant mesurée en continu à partir des valeurs de mesure ainsi déterminées, la divergence entre la grandeur théorique et la grandeur réelle de réglage étant définie et convertie en une modification d'une grandeur d'ajustement, caractérisé en ce que la température de l'oignon d'étirage (5) est mesurée et est utilisée comme grandeur de réglage.

14. Procédé selon la revendication 13, caractérisé en ce que la température du dispositif de chauffage est mesurée et en ce que dans une régulation en cascade, la température de l'oignon d'étirage est utilisée comme grandeur principale de réglage et la température du dispositif de chauffage comme grandeur auxiliaire de réglage.

15. Dispositif pour la fabrication d'un corps allongés en verre par tirage d'une préforme, comprenant un dispositif d'avance pour l'amenée de la préforme à un dispositif de chauffage, comprenant une aspiration pour le retrait du corps hors d'une zone de la préforme ramollie dans le dispositif de chauffage, comprenant un dispositif de mesure pour la saisie d'une grandeur géométrique du corps étirée à partir de la préforme, lequel est relié à un dispositif de réglage déterminant la divergence entre la grandeur de réglage théorique et la grandeur de réglage effective et en ajustant en fonction une grandeur d'ajustement, caractérisé en ce que pour la saisie de la grandeur géométrique du corps (6; 26) il est prévu un dispositif de mesure (9) qui doit être associé à un point de mesure (25) se trouvant dans la zone ramollie (4) de la préforme (1; 27).

16. Dispositif selon la revendication 14, caractérisé en ce que pour la saisie de la grandeur géométrique du corps (6; 26), il est au moins prévu deux dispositifs de mesure (8; 9; 22) reliés au dispositif de réglage (20).

17. Dispositif selon la revendication 15 ou 16, caractérisé en ce qu'un dispositif de mesure (9) est disposé dans la zone de l'élément de chauffage (3).

18. Dispositif selon la revendication 17, caractérisé en ce que le dispositif de mesure (9) est disposé à l'extérieur de l'élément de chauffage (3) et qu'il est prévu dans l'élément de chauffage (3) au moins une ouverture (10) à travers laquelle on peut procéder à la mesure de la grandeur géométrique sans contact.

19. Dispositif selon l'une des revendications 15 à 18, caractérisé en ce qu'un pyromètre (14) relié au dispositif de réglage (20) est prévu pour la mesure de la température de la préforme (1; 27) dans la zone ramollie (4).

20. Dispositif selon l'une des revendications 15 à 19, caractérisé en ce que le dispositif de réglage (20) comprend un régulateur Fuzzy-Logic.

**21.** Dispositif selon la revendication 20, caractérisé en ce que l'ensemble des régulateurs sont conçus comme des régulateurs Fuzzy-Logic.

Fig.1

Fig.2